# EUROPEAN PATENT APPLICATION

(11) **EP 3 244 010 A2**
(43) Date of publication of application: **15.11.2017**
(21) Application number: 17163020.5
(22) Date of filing: 27.03.2017
(51) Int. Cl.: F01D 5/18

(54) **HIGH POROSITY MATERIAL AND METHOD OF MAKING THEREOF**

(30) Priority: 05.04.2016 US 201615091339
(71) Applicant: General Electric Company, Schenectady, NY 12345 (US)
(72) Inventor: ROBERTS, Herbert Chidsey, Cincinnati, OH 45215 (US); GIGLIOTTI JR., Michael Francis Xavier, Niskayuna, NY 12309 (US); ALBRECHT JR., Richard William, Cincinnati, OH 45215 (US); ESTILL, Eric Alan, Cincinnati, OH 45215 (US); FLYNN, Peter Andrew, Niskayuna, NY 12309 (US)
(74) Representative: Pöpper, Evamaria

(57) **Abstract**

The present disclosure relates to a ceramic or metallic component (300) including a first region (305) having a first porosity ranging between 1 and 30%. The component includes a second region (310) having a second porosity that is less than the first porosity. The component includes at least one graded transition (325) between the first and second regions (305,310).

## Description

### INTRODUCTION

The present disclosure generally relates to porous metallic components have varying porosities, and methods of making the same. The porous properties of the present invention can include variations in size, shape, and density. The selective porosity provides useful properties in cooling components of jet aircraft engines, e.g., turbine blades, through transpiration.

### BACKGROUND

Many modem engines and next generation turbine engines require components and parts having intricate and complex geometries, which require new types of manufacturing techniques. Conventional techniques for manufacturing engine parts and components involve the laborious process of investment or lost-wax casting. One example of investment casting involves the manufacture of a typical rotor blade used in a gas turbine engine. A turbine blade typically includes hollow airfoils that have radial channels extending along the span of a blade having at least one or more inlets for receiving pressurized cooling air during operation in the engine. Among the various cooling passages in the blades, serpentine channel are disposed in the middle of the airfoil between the leading and trailing edges. The airfoil typically includes inlets extending through the blade for receiving pressurized cooling air, which include local features such as short turbulator ribs or pins for increasing the heat transfer between the heated sidewalls of the airfoil and the internal cooling air.

The manufacture of these turbine blades, typically from high strength, superalloy metal materials, involves numerous steps. First, a precision ceramic core is manufactured to conform to the intricate cooling passages desired inside the turbine blade. A precision die or mold is also created which defines the precise 3-D external surface of the turbine blade including its airfoil, platform, and integral dovetail. The ceramic core is assembled inside two die halves which form a space or void therebetween that defines the resulting metal portions of the blade. Wax is injected into the assembled dies to fill the void and surround the ceramic core encapsulated therein. The two die halves are split apart and removed from the molded wax. The molded wax has the precise configuration of the desired blade and is then coated with a ceramic material to form a surrounding ceramic shell. Then, the wax is melted and removed from the shell leaving a corresponding void or space between the ceramic shell and the internal ceramic core. Molten superalloy metal is then poured into the shell to fill the void therein and again encapsulate the ceramic core contained in the shell. The molten metal is cooled and solidifies, and then the external shell and internal core are suitably removed leaving behind the desired metallic turbine blade in which the internal cooling passages are found.

The cast turbine blade may then undergo additional post casting modifications, such as but not limited to drilling of suitable rows of film cooling holes through the sidewalls of the airfoil as desired for providing outlets for the internally channeled cooling air which then forms a protective cooling air film or blanket over the external surface of the airfoil during operation in the gas turbine engine. The cooling channels may also be produced by Electrical Discharge Machining (EDM), which produces the cooling channels using electrical discharge. However, both drilling and EDM are limited and given the ever increasing complexity of turbine engines and the recognized efficiencies of certain cooling circuits of turbine blades, more complicated and intricate cooling geometries are required. While investment casting is capable of manufacturing these parts, positional precision and intricate geometries of the cooling channels become more complex to manufacture using these conventional manufacturing processes. For instance, drilling cooling holes through the side walls of the airfoil limits the diameter of the holes to the size of the smallest drill bit. Additionally, it also limits the ability to vary the diameter and/or shape of the channel throughout. The channel is limited to a linear shape. Thus it is difficult to construct a turbine blade having small channels, a high density of channels, and channels that vary in diameter and shape. Specifically, it is difficult to construct a turbine blade having a highly porosity that does not suffer from the above limitations.

### SUMMARY

In an embodiment, the present invention relates to a ceramic or metallic component including a first region having a first porosity ranging between 1 and 30%. The component includes a second region having a second porosity that is less than the first porosity. The component includes at least one graded transition between the first and second regions.

In one aspect of the invention, the component forms a portion of a turbine blade, for example within a jet aircraft engine.

In another aspect, the present invention relates to a turbine blade including a first region, the first region having a porosity ranging between 1 and 30%. The turbine blade includes a second region comprising no porosity or a porosity less than the first region.

In another aspect, the present invention relates to methods of making a porous component. The method includes steps of building the component on a layer-by-layer basis. This process involves (a) irradiating a layer of powder in a powder bed to form an at least partially fused region; (b) providing a subsequent layer of powder over the powder bed; and (c) repeating steps (a) and (b) until the component is completed, wherein the component comprises a first metallic region, the first metallic region having a porosity ranging between 1 and 30%, and second metallic region having either no porosity or a porosity less than that of the first metallic region.

### BRIEF DESCRIPTION OF THE DRAWINGS

FIG. 1 is a schematic diagram showing an example of a conventional apparatus for additive manufacturing.
FIG. 2 illustrates an exemplary embodiment of a turbine blade.
FIG. 3 illustrates an exemplary embodiment of turbine blade comprising a region of porosity.
FIG. 4 illustrates an exemplary embodiment of a discrete stepped graded transition.
FIG. 5 illustrates an exemplary embodiment of a continuous graded transition.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details.

The porous component of the present invention can be made using an additive manufacturing (AM) process. AM processes generally involve the buildup of one or more materials to make a net or near net shape (NNS) object, in contrast to subtractive manufacturing methods. Though "additive manufacturing" is an industry standard term (ASTM F2792), AM encompasses various manufacturing and prototyping techniques known under a variety of names, including freeform fabrication, 3D printing, rapid prototyping/tooling, etc. AM techniques are capable of fabricating complex components from a wide variety of materials. Generally, a freestanding object can be fabricated from a computer aided design (CAD) model. A particular type of AM process uses an energy beam, for example, an electron beam or electromagnetic radiation such as a laser beam, to sinter or melt a powder material, creating a solid three-dimensional object in which particles of the powder material are bonded together. Different material systems, for example, engineering plastics, thermoplastic elastomers, metals, and ceramics are in use. Either laser sintering or melting are a notable AM processes for rapid fabrication of functional prototypes and tools. Applications include direct manufacturing of complex workpieces, patterns for investment casting, metal molds for injection molding and die casting, and molds and cores for sand casting. Fabrication of prototype objects to enhance communication and testing of concepts during the design cycle are other common usages of AM processes.

Selective laser sintering, direct laser sintering, selective laser melting, and direct laser melting are common industry terms used to refer to producing three-dimensional (3D) objects by using a laser beam to sinter or melt a fine powder. For example, U.S. Patent Number 4,863,538 and U.S. Patent Number 5,460,758 describe conventional laser sintering techniques. More accurately, sintering entails fusing (agglomerating) particles of a powder at a temperature below the melting point of the powder material, whereas melting entails fully melting particles of a powder to form a solid homogeneous mass. The physical processes associated with laser sintering or laser melting include heat transfer to a powder material and then either sintering or melting the powder material. Although the laser sintering and melting processes can be applied to a broad range of powder materials, the scientific and technical aspects of the production route, for example, sintering or melting rate and the effects of processing parameters on the microstructural evolution during the layer manufacturing process have not been well understood. This method of fabrication is accompanied by multiple modes of heat, mass and momentum transfer, and chemical reactions that make the process very complex.

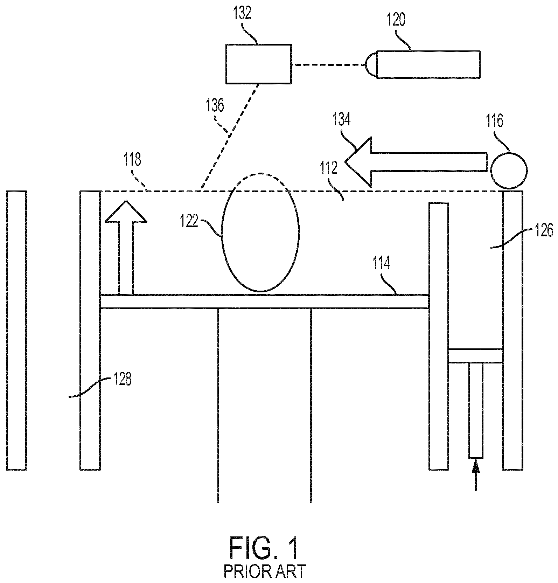

FIG. 1 is schematic diagram showing a cross-sectional view of an exemplary conventional system 100 for direct metal laser sintering (DMLS) or direct metal laser melting (DMLM). The apparatus 100 builds objects, for example, the part 122, in a layer-by-layer manner by sintering or melting a powder material (not shown) using an energy beam 136 generated by a source such as a laser 120. The powder to be melted by the energy beam is supplied by reservoir 126 and spread evenly over a build plate 114 using a recoater arm 116 travelling in direction 134 to maintain the powder at a level 118 and remove excess powder material extending above the powder level 118 to waste container 128. The energy beam 136 sinters or melts a cross sectional layer of the object being built under control of the galvo scanner 132. The build plate 114 is lowered and another layer of powder is spread over the build plate and object being built, followed by successive melting/sintering of the powder by the laser 120. The process is repeated until the part 122 is completely built up from the melted/sintered powder material. The laser 120 may be controlled by a computer system including a processor and a memory. The computer system may determine a scan pattern for each layer and control laser 120 to irradiate the powder material according to the scan pattern. After fabrication of the part 122 is complete, various post-processing procedures may be applied to the part 122. Post processing procedures include removal of excess powder by, for example, blowing or vacuuming. Other post processing procedures include a stress relief process.

The traditional laser melting/sintering techniques described above have certain limitations in regard to producing AM objects having varying compositions. For example, although it is possible to vary the composition of the powder in successive layers this can become cumbersome particularly in an industrialized setting where downtime between manufacturing steps comes at a high cost. Recently, more advanced methods of laser melting/sintering have been developed that allow precise control of the composition of the build both between successive powder layers of the build and laterally within the same powder layer. *See* U.S. Patent Application No. 14/834,517 filed August 25, 2015, and entitled "Coater Apparatus and Method for Additive Manufacturing," which is incorporated by reference herein in its entirety.

As will be discussed in the foregoing, AM techniques may be utilized to produce a turbine blade having a porous surface of channels that are fully configurable according to size, shape, and porosity. Although the present disclosure will focus on a gas turbine blade, one of ordinary skill in the art will appreciate that the foregoing description is not limited to gas turbine blades and may be applied to any suitable component made of a metal or alloy and having a porosity. Such components include but are not limited to other types of turbine blades such as wind and water turbines, advanced oil and water filters, and hepa filters.

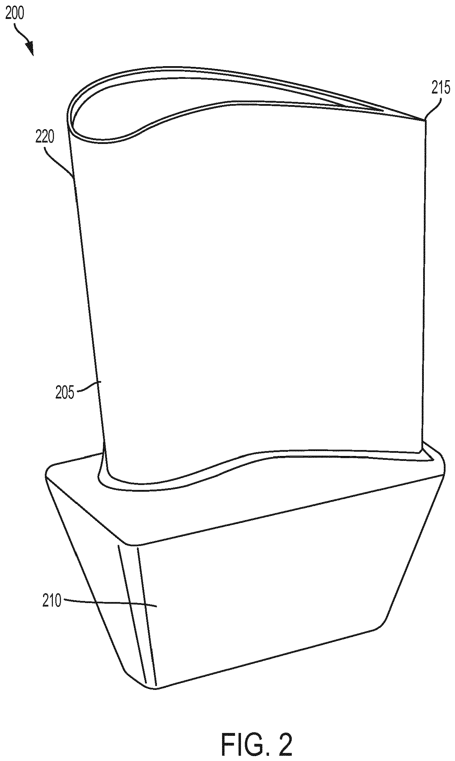

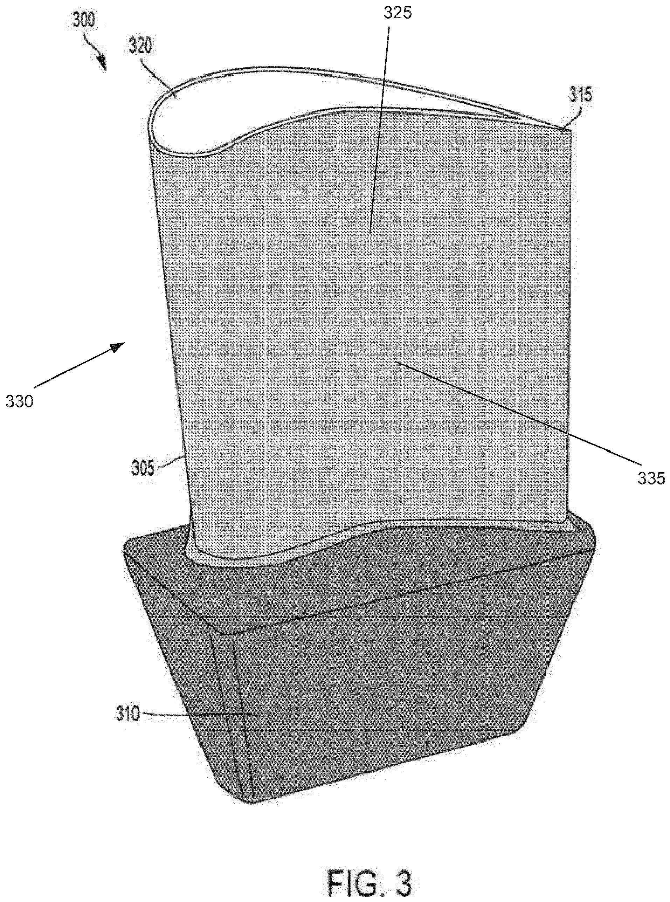

The DMLS system described above may be utilized to build a part 122 such as the turbine blade described with respect to FIGs. 2 and 3. The DMLS system may build a root portion and a blade portion of the turbine blade in the layer-by-layer based on the process described above, which may include: (a) irradiating a layer of powder in a powder bed to form an at least partially fused region, (b) providing a subsequent layer of powder over the powder bed, and (c) repeating steps (a) and (b) until the turbine blade is completed. As will be discussed in the forgoing, the built turbine blade may have a porous metallic region. The porous metallic region may have a porosity ranging between 1 and 30% and pore diameters ranging from 0.025 to 0.8 millimeters(mm) or 1-30 mils.

The claimed invention may also be used to provide a porous region in several other components of a jet aircraft engine. For example, the porous region of the invention may be included as part of combustor, engine casing, a combustor liner, or liner in any other part of the aircraft engine. The porous region of the present invention provides for transpiration cooling as opposed to effusion film cooling associated with larger diameter holes provided in these components.

In one embodiment of the invention, the porous component is provided with two regions of differing porosity (or a non-porous region and a porous region). One possible arrangement is that the level of porosity between a first region and a second region is graded so that the porosity gradually decreases along the length of the component. The component may also have a transition zone that includes grading between two distinct regions having differing porosities. In another aspect of the invention, the porous region is provided within a conventional effusion cooling hole so that there is a combined effect of transpiration and effusion cooling.

FIG. 2 illustrates an exemplary embodiment of a turbine blade 200. The turbine blade 200 may be a gas turbine blade commonly used in jet engines. The turbine blade 200 comprises a blade portion 205 and a root portion 210. The blade portion 205 comprises a leading edge 220 and a trailing edge 215. As shown, the root portion 210 is flat, or lacks a dovetail. One of the benefits of the present invention is that the AM techniques discussed above can produce a root that is lighter than turbine blade roots made by a conventional casting operation, structurally sound, and mechanically balanced. As a result, the root portion 210 may be attached to a turbine rotor by diffusion bonding or linear friction bonding, forming an integrated bladed rotor. Furthermore, the turbine rotor, the root portion 210 and the blade portion 205 may be formed in a continuous process with the blade portion 205 via additive manufactured. Moreover, one of ordinary skill in the art will appreciate that the shape of the root portion 210 is one example of a shape and structure for the root portion 210. Any suitable shape and structure that is configured to form the integrated rotor blade may be utilized without departing from the scope of the invention.

The core of the blade portion 205 may be an internal cooling channel adapted to provide cooling air through a portion of the root portion 210 to the blade portion 205 to aid in cooling. The internal cooling channel also provides a lighter turbine blade, lowers manufacturing costs, and reduces the complexity of the design. For instance, the cooling channel may be a hollow center within the blade portion 205 and/or at least a portion of the root portion 210. As will be discussed in greater detail with respect to the following figures, the present turbine blade 200 design negates the need for a complex serpentine structure as is typically required to cool a turbine blade. The hollow center may provide increased cooling and better thermal transpiration. Moreover, the AM process enables the entire turbine blade 205 and/or the disc at which the turbine blade attaches to be constructed as a single piece, which may provide a more heat-resistant component.

The turbine blade 200 may comprise at least one superalloy. The superalloy may include nickel based alloys including, but not limited to inconel 718, inconel 625, René N5, René N6, René 95, Waspaloy and any other superalloy suitable for producing the turbine blade 200. Nickel alloys may be preferred because they are more crack resistant over time and temperature. Additionally, the root portion 210 may comprise a different superalloy than the blade portion 205. Thus, it may be possible to configure the AM operation to switch materials when producing the various portions of the turbine blade 200, as discussed above with respect to FIG. 1.

FIG. 3 illustrates a turbine blade 300. The turbine blade 300 is similar to the turbine blade 200 described with respect to FIG. 2. The description above of the turbine blade 200 also applies to the turbine blade 300. The turbine blade 300 comprises a blade portion 305 and a root portion 310. The blade portion 305 comprises a leading edge 320 and a trailing edge 315. The blade portion 305 further comprises an airfoil pressure side 330, an airfoil suction side 335, and a graded transition area 325. The airfoil suction side is on the rear of the blade portion 305 and not seen in this figure.

As shown, the blade portion 305 may have an inner surface exposed to the internal cooling channel discussed above. The inner surface of the blade portion 205 may be hollow. The blade portion 305 may also have an outer surface opposite the inner surface. In some aspects of the turbine blade, the inner surface of the blade portion 305 and the outer surface of the blade portion 305 are not connected by any type of cooling channels. The blade portion 305 may have a porous metallic region from the inner surface to the outer surface. The porous metallic region may have a first porosity ranging from 1 to 30%. Preferably the porous metallic region is prepared using the DMLS technique described above. DMLS is capable of forming a randomized porous material while still maintaining the structural integrity of the blade portion 305. For instance, the blade portion 305 may have a porosity between 1 and 30%, 5 and 25%, 10 and 20%, or approximately 15%. In some aspects of the turbine blade 300, the porous metallic region may cover the entirety of the turbine blade 305.

The root portion 310 may have a second porosity. The first and second porosities may be the same or different dependent on the design and configuration of the turbine blade 300. For instance, the porosity of the root portion 310 may be less than the porosity of the blade portion 305. Additionally, the root portion 310 may be solid, having no porosity.

The porosity of the blade portion 305 may be configured to maximize cooling efficiency while maintaining the structural integrity of the blade. For instance, the blade portion 305 may comprise pores smaller in size than those that can be formed by conventional casting techniques. For instance, a pore may have a diameter less than 0.8 mm. The conventional casting methods discussed above limit the size of the pores to greater than 0.125 mm. Thus, the AM manufacturing process is capable of producing a turbine blade 300 with smaller pores than conventional casting methods. The benefit of smaller pores is that a higher porosity may be realized, while still maintaining the structural integrity of the turbine blade 300 and more efficient transpiration cooling may be realized. By being able to produce a turbine blade of a high porosity, the mass of the blade is also reduced, also making cooling simpler and more efficient. In practice the lower bound of the pore size is governed by the resolution of the AM process. The lower pore sizes therefore range in diameter from 0.025-0.8 mm. The porosity of the present invention therefore ranges from 0.025 to 0.8, more preferably from 0.05 to 0.100 mm.

Additionally, the AM techniques for producing the turbine blade 30 provide a mechanism to produce pores of varying size and shape. For instance, the turbine blade 305 may comprise at least one pore having a varying diameter, such as a cone shape. Furthermore, the blade portion 305 may comprise at least one pore having a non-linear shape, such as a curved shape or a shape having multiple bends. When the turbine blade is in operation, air may enter the inner channel of the blade portion 305 and escape through the porous texture formed between the inner surface and the outer surface of the blade portion 305. A cooling film around the blade portion 305 may be produced to cool the turbine blade by thermal transpiration. Production of the various different pore sizes and shapes provide greater granularity in adjusting the way air flows through the blade portion 305. The porosity of the blade portion 305 (and the root portion 310) may be adjusted during the AM process by adjusting the laser power, feed rate or density of the powder material, active and conductive cooling levels, and/or oxidation levels of the material. The powder material may be a metallic and/or a polymer powder. The porosity may be defined such that it falls within a preset tolerance rather than a specifically defined porosity.

In some embodiments of the turbine blade 300 it may be desirable to vary the porosity in different parts of the blade portion 305. For instance, a portion of the leading edge 320 may reach higher temperatures during operation than the trailing edge 315. Accordingly, a higher porosity may be produced in a portion of the outer surface of the leading edge 320 and a lower porosity may be produced in at least a portion of the outer surface of the trailing edge 315. Additionally, some of the pores at both the leading and trailing edges 320 and 315, respectively may vary in size and shape to provide greater granularity in controlling airflow through the turbine blade 305.Moreover, the present turbine blade design negates the need for a complex serpentine structure as is typically required to cool a turbine blade because techniques provide the capability of setting varying porosities in different regions of the blade portion 305 with such granularity to precisely control the airflow from the internal cooling channel through the porous surface. Thus the outer surface of the turbine blade 305 may be efficiently cooled without compromising performance.

In another example, additive manufacturing techniques enable the formation of a component, such as a turbine blade, with a graded porosity. The graded component may be metallic or have ceramic components. The component may include a graded transition 325 between two regions, where the porosities change. For instance, the blade portion 305 may include a graded transition 325 between the leading edge 320 and the trailing edge 315, where the porosity starts to change. In another example, the turbine blade 300 may include a graded transition 325 between the blade portion 305 and root portion 310. In still a further example, the turbine blade 300 may include a graded transition between the suction side 335 and the pressure side 330. Thus the porosity gradient may run in an axial and/or radial direction. Moreover, the graded transitions are not discrete. For instance, any combination of graded transitions between the various regions of the turbine blade 300 may be utilized without departing from the scope of the design. Each region may have a different porosity. Thus, the turbine blade 300 may have a variety of porosities and/or graded transitions between the leading edge 320 and the trailing edge 315, the suction side 335 and the pressure side 300, and/or between the root portion 310 and the blade portion 305.

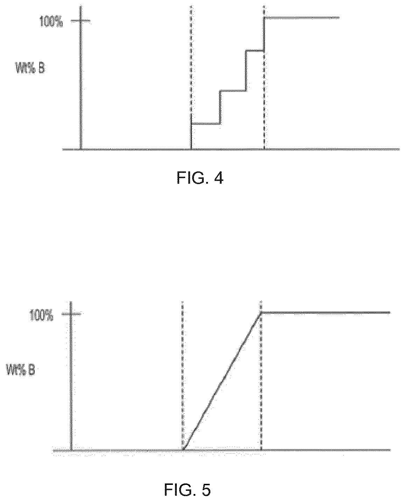

The term "graded transition" includes a discrete stepped graded transition as shown in Fig. 4. The discrete stepped graded transition is created by step-wise variation in the powder composition in a powder bed either within a single layer or between successive layers. The stepwise transition may be smoothed by subsequent diffusion of the materials. However, for any two given materials, the discrete stepped graded transition provides a more gradual transition between the materials than that possible by diffusion alone.

The term "graded transition" includes a continuous graded transition as shown in Fig. 5. The continuous graded transition is created by continuous variation in the powder composition in a powder bed either within a single layer or between successive layers. In the case of successive layers, a continuous transition denotes one where step-wise material changes are so gradual that it is impossible to detect a stepped grade in the material. For example, if the materials subsequently diffuse to the point where the transition appears continuous between materials. As with the discrete stepped graded transition, for any two given materials, the continuous graded transition provides a more gradual transition between the materials than that possible by diffusion alone.

As discussed above, the root portion 310 may also comprise a porosity. The pores of the root portion 310 may vary in size and shape, similar to how the channels of the blade portion 305 vary in size and shape. The channels formed in the root portion 310 reduce the weight of the turbine blade 300. However, by having the capability of forming pores of varying shapes and sizes, the structural integrity of the turbine blade 300 is not impacted.

This written description uses examples to disclose the invention, including the preferred embodiments, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims. Aspects from the various embodiments described, as well as other known equivalents for each such aspect, can be mixed and matched by one of ordinary skill in the art to construct additional embodiments and techniques in accordance with principles of this application.

Various aspects and embodiments of the present invention are defined by the following clauses:
1. A ceramic or metallic component comprising:
   first region having a first porosity ranging between 1 and 30%; and
      a second region having a second porosity that is less than the first porosity, wherein the component comprises at least one graded transition between the first and second regions.
2. The component of clause 1, wherein the first and second regions comprise pores having a diameter between 0.05mm and 0.1mm.
3. The component of clause 1, where in the graded transition comprises a stepped graded transition.
4. The component of clause 1, wherein the transition comprises a continuous graded transition.
5. A turbine blade comprising:
   a first region having a hollow center and a porosity ranging between 1 and 30%; and
   a second region comprising no porosity or a porosity less than the first region.
6. The turbine blade of clause 5, wherein the first region is a blade portion and the second region is a root portion of the turbine blade.
7. The turbine blade of clause 5, wherein the first and second regions comprise pores having a diameter between 0.02mm and 0.4mm.
8. A method of making a porous component comprising:
   building the component on a layer-by-layer basis, comprising the steps of:
      (a) irradiating a layer of powder in a powder bed to form an at least partially fused region;
      (b) providing a subsequent layer of powder over the powder bed; and
      (c) repeating steps (a) and (b) until the component is completed, wherein the component comprises a first metallic region, the first metallic region having a porosity ranging between 1 and 30%, and second metallic region having either no porosity or a porosity less than that of the first metallic region.
9. The method of clause 8, wherein the porous metallic region has a porosity ranging from 5 to 25%.
10. The method of clause 8, wherein the porous metallic region has a porosity ranging from 10 to 20%.
11. The method of clause 8, wherein the pores have a maximum diameter ranging from 0.02 to 0.4 mm.
12. The method of clause 8, wherein the pores have a maximum diameter ranging from 0.05mm to 0.3 mm.
13. The method of clause 8, wherein the pores have a maximum diameter ranging from 0.05mm to 0.1 mm.
14. A turbine blade comprising:
   a hollow center;
   a first region having an outer surface and an internal surface exposed to the hollow center, the first region further having a first porosity; and
   a second region having a second porosity that is less than the first porosity, wherein air flows from inside the hollow center through the first porous region to cool the outer surface.
15. The turbine blade of clause 14, further comprising a leading edge and a trailing edge opposite the leading edge.
16. The turbine blade of clause 15, wherein the first region comprises at least one graded transition between a first sub-region at the leading edge and a second sub-region at the trailing edge, wherein the second sub-region has a different porosity than the first sub-region.
17. The turbine blade of clause 14, further comprising a pressure side and a suction side opposite the pressure side.
18. The component of clause 17, wherein the first region comprises a first sub-region at the pressure side and a second sub-region at the suction side, wherein the first sub-region has a different porosity than the second sub-region.
19. The component of clause 14, wherein the graded transition comprises a stepped graded transition.
20. The component of clause 14, wherein the transition comprises a continuous graded transition.

## Claims

1. A ceramic or metallic component (300) comprising:
first region (305) having a first porosity ranging between 1 and 30%; and
a second region (310) having a second porosity that is less than the first porosity,
wherein the component (300) comprises at least one graded transition (325) between the first and second regions (305, 310).

2. The component (300) of claim 1, wherein the first and second regions (305, 310) comprise pores having a diameter between 0.05mm and 0.1mm.

3. The component (300) of claim 1, where in the graded transition (325) comprises a stepped graded transition.

4. The component (300) of claim 1, wherein the transition (325) comprises a continuous graded transition.

5. A turbine blade (300) comprising:
a first region (305) having a hollow center and a porosity ranging between 1 and 30%; and
a second region (310) comprising no porosity or a porosity less than the first region (305).

6. The turbine blade (300) of claim 5, wherein the first region (305) is a blade portion and the second region (310) is a root portion of the turbine blade (300) and , wherein the first and second regions (305, 310) comprise pores having a diameter between 0.02mm and 0.4mm

7. A method of making a porous component (300) comprising:
building the component on a layer-by-layer basis, comprising the steps of:
(a) irradiating a layer of powder in a powder bed to form an at least partially fused region;
(b) providing a subsequent layer of powder over the powder bed; and
(c) repeating steps (a) and (b) until the component is completed, wherein the component comprises a first metallic region (305), the first metallic region (305) having a porosity ranging between 1 and 30%, and second metallic region (310) having either no porosity or a porosity less than that of the first metallic region (305).

8. The method of claim 7, wherein the porous metallic region has a porosity ranging from 5 to 25% and preferably ranging from 10 to 20%.

9. The method of claim 8, wherein the pores have a maximum diameter ranging from 0.02 to 0.4 mm; preferably ranging from 0.05mm to 0.3 mm and more preferably ranging from 0.05mm to 0.1 mm.

10. A turbine blade (300) comprising:
a hollow center;
a first region (305) having an outer surface and an internal surface exposed to the hollow center, the first region (305) further having a first porosity; and
a second region (310) having a second porosity that is less than the first porosity, wherein air flows from inside the hollow center through the first porous region (305) to cool the outer surface.

11. The turbine blade (300) of claim 10, further comprising a leading edge (320) and a trailing edge (315) opposite the leading edge (320).

12. The turbine blade (300) of claim 11, wherein the first region (305) comprises at least one graded transition (325) between a first sub-region at the leading edge (320) and a second sub-region at the trailing edge (315), wherein the second sub-region has a different porosity than the first sub-region.

13. The turbine blade (300) of claim 12, further comprising a pressure side (330) and a suction side (330) opposite the pressure side (325) and wherein the first region (305) comprises a first sub-region at the pressure side (330) and a second sub-region at the suction side (335), wherein the first sub-region has a different porosity than the second sub-region.

14. The turbine blade (300) of claim 10, wherein the graded transition (325) comprises a stepped graded transition.

15. The turbine blade (300) of claim 10, wherein the graded transition (325) comprises a continuous graded transition.
